# EUROPÄISCHE PATENTANMELDUNG

(11) **EP 1 529 592 A1**
(43) Veröffentlichungstag der Anmeldung: **11.05.2005**
(21) Anmeldenummer: 03025547.5
(22) Anmeldetag: 08.11.2003
(51) Int. Cl.: B23K 26/04, G01B 11/27, G05B 19/425, B23K 26/03

(54) **Ausrichtvorrichtung und -anordnung für einen Laserstrahl sowie zugehöriges Teach-Verfahren**

(71) Anmelder: TRUMPF Laser GmbH + Co. KG, 78713 Schramberg (DE)
(72) Erfinder: Huonker, Martin, Dr., 78658 Zimmern (DE)
(74) Vertreter: Kohler Schmid Möbus

(57) **Zusammenfassung**

Eine Vorrichtung (6) zur Ausrichtung eines Lichtstrahls (3), insbesondere Laserstrahls, zu einer Werkstückoberfläche (4) weist ein Gehäuse (8) mit einer auf die Werkstückoberfläche (4) in einem vorbestimmtem Winkel aufsetzbaren Unterseite und zwei ortsauflösende Flächendetektoren (7a,7b) auf, die in fester Anordnung zueinander und in unterschiedlichem optischem Abstand zur Lichtquelle des in die Ausrichtvorrichtung (6) einfallenden Lichtstrahls (3) angeordnet sind.

## Beschreibung

Die vorliegende Erfindung betrifft eine Vorrichtung und eine Anordnung zur Ausrichtung eines Lichtstrahls, insbesondere Laserstrahls, zu einer Werkstückoberfläche sowie ein Teach-Verfahren für das Erstellen von Programmen einer Bearbeitung von Werkstücken mittels eines Bearbeitungslaserstrahls, der durch eine Austrittsoptik auf der Werkstückoberfläche entlang einer Bahnkurve verfahren wird.

Aus DE 199 61 625 C1 ist bekannt, den Abstand und den Winkel zwischen der Austrittsoptik (Laserbearbeitungsoptik) und der Werkstückoberfläche gleichzeitig einzustellen. Dazu wird ein Hilfslaser benutzt, dessen Strahlung als Lichtkegel mit einem Mittelstrahl auf die Werkstückoberfläche gerichtet ist und dort im Auftreffort als kreis- oder ellipsenförmiger Ring mit einem Punkt in der Mitte projiziert wird. Eine schräg zu diesem Hilfslaserstrahl angeordnete CCD-Kamera wertet das auf der Werkstückoberfläche abgebildete Muster in der Weise aus, dass aus der Lage des Mittelpunkts im Kamerabild über Triangulation der Abstand der Bearbeitungsoptik vom Werkstück ermittelt wird. Aus der Form des Rings wird die Neigung der Austrittsoptik zur Werkstückoberfläche bestimmt. Die Anwendung dieses Verfahrens erfordert allerdings eine aufwändige Datenerfassung und -verarbeitung. Das Verfahren ist zudem nicht für die Anwendung bei gekrümmten Werkstückoberflächen geeignet.

Demgegenüber ist es die Aufgabe der vorliegenden Erfindung, eine Ausrichtvorrichtung und -anordnung bereitzustellen, mit welcher der Lichtstrahl auch bei beliebig gekrümmten Werkstückoberflächen mit möglichst hoher Genauigkeit zur Werkstückoberfläche, insbesondere rechtwinklig dazu, ausgerichtet werden kann, sowie ein zugehöriges Teach-Verfahren anzugeben.

Diese Aufgabe wird erfindungsgemäß gelöst durch eine Vorrichtung zur Ausrichtung eines Lichtstrahls, insbesondere Laserstrahls, zu einer Werkstückoberfläche mit einer auf die Werkstückoberfläche in einem vorbestimmtem Winkel aufsetzbaren Unterseite und mit zwei ortsauflösenden Flächendetektoren, die in fester Anordnung zueinander und in unterschiedlichem optischem Abstand zur Lichtquelle des in die Ausrichtvorrichtung einfallenden Lichtstrahls angeordnet sind.

Erfindungsgemäß sind die beiden Flächendetektoren mechanisch fest zueinander positioniert und können bei rechtwinklig bzw. lotrecht auf die Werkstückoberfläche aufgesetzter Ausrichtvorrichtung z.B. ein identisches Positionssignal erzeugen, wenn der Lichtstrahl parallel zur Achse der Ausrichtvorrichtung auf die Ausrichtvorrichtung trifft, d.h., wenn der Lichtstrahl lotrecht zur Werkstückoberfläche ausgerichtet ist. Die Ausrichtvorrichtung wird vorzugsweise im Bereich eines bereits auf eine bestimmte Werkstückposition fokussierten Laserstrahls auf das Werkstück aufgesetzt, und der Lichtstrahl bzw. die entsprechende Austrittsoptik (Bearbeitungsoptik) wird rechtwinklig zur Werkstückoberfläche ausgerichtet, indem die Austrittsoptik so lange um den Fokuspunkt gedreht wird, bis die beiden Positionsdetektoren identische Signale liefern.

Bei einer ersten bevorzugten Ausführungsform der erfindungsgemäßen Ausrichtvorrichtung sind die beiden Flächendetektoren im Strahlengang des einfallenden Lichtstrahls hintereinander angeordnet, wobei derjenige Flächendetektor, auf den der in die Ausrichtvorrichtung einfallende Lichtstrahl zuerst trifft, für den Lichtstrahl teildurchlässig ist.

Bei einer zweiten bevorzugten Ausführungsform der erfindungsgemäßen Ausrichtvorrichtung weist die Ausrichtvorrichtung einen Strahlteiler, insbesondere einen teildurchlässigen Spiegel, auf, der den in die Ausrichtvorrichtung einfallenden Lichtstrahl sowohl in Richtung auf den einen Flächendetektor durchlässt als auch in Richtung auf den anderen Flächendetektor reflektiert.

Um die Detektoreinheit in dem vorbestimmten Winkel, insbesondere lotrecht, auf einer beliebig gekrümmten Werkstückoberfläche anordnen zu können, weist die Ausrichtvorrichtung an ihrer Unterseite bevorzugt drei Füße auf, die magnetisch sein können.

Vorzugsweise sind die Flächendetektoren und, falls vorhanden, auch der Strahlteiler in einem gemeinsamen Gehäuse zusammengefasst, so dass die Ausrichtvorrichtung als kompakte Einheit von Hand auf das Werkstück aufgesetzt werden kann.

Erfindungsgemäß können die Flächendetektoren als Photodetektoren, insbesondere positionsempfindliche Elemente (PSD: position sensitive device), Lateraleffektdioden oder Quadrantendetektoren, ausgebildet sein. Die positionsempfindlichen Elemente (PSDs) gibt es in unterschiedlichen Größen von ca. 4 mm x 4 mm bis über 20 mm x 20 mm. Bei einem auf das Werkstück fokussierten Lichtstrahl ist für den näher am Fokuspunkt angeordneten Flächendetektor ein Element mit kleinerer Detektorfläche einsetzbar. Auch Kamerachips und preisgünstige Quadrantendetektoren, die es in verschiedenen Größen gibt, können verwendet werden.

Besonders bevorzugt weist die erfindungsgemäße Ausrichtvorrichtung eine Anzeigeeinheit für die Ausgangssignale der Flächendetektoren auf, so dass ein Bediener anhand der angezeigten Ausgangssignale den einfallenden Lichtstrahl bzw. die Austrittsoptik manuell ausrichten kann.

Die oben genannte Aufgabe wird erfindungsgemäß auch gelöst durch eine Anordnung zur Ausrichtung eines auf ein Werkstück treffenden Lichtstrahls, insbesondere Laserstrahls, zur Werkstückoberfläche, mit einer Austrittsoptik für den Lichtstrahl und einer auf die Werkstückoberfläche aufgesetzten Ausrichtvorrichtung, wie sie oben beschrieben ist, wobei Austrittsoptik und Werkstück relativ zueinander bewegbar sind.

Vorzugsweise weist die erfindungsgemäße Ausrichtanordnung eine Steuereinheit auf, welche das Ausrichten des Lichtstrahls zur Werkstückoberfläche, d.h. die Relativbewegung zwischen Austrittsoptik und Werkstück, anhand von ortsaufgelösten Ausgangssignalen der beiden Flächendetektoren steuert. Die Steuereinheit ermöglicht es, die lotrechte Ausrichtung des Lichtstrahls auf einer beliebig gekrümmten Werkstückoberfläche zu automatisieren. Das Ausrichten kann, wenn die Austrittsoptik von einem Roboter oder einer Mehrachs-Positioniereinheit getragen wird, durch ein in der entsprechenden Maschinensteuerung hinterlegtes Programm, in welches die ortaufgelösten Ausgangssignale der erfindungsgemäßen Ausrichtvorrichtung rückgekoppelt werden, automatisiert werden.

Die oben genannte Aufgabe wird erfindungsgemäß auch gelöst durch ein Teach-Verfahren für das Erstellen von Programmen einer dreidimensionalen Bearbeitung von Werkstücken mittels eines Bearbeitungslaserstrahls, der durch die Austrittsoptik auf der Werkstückoberfläche entlang einer Bahnkurve verfahren wird, unter Verwendung der oben beschriebenen Ausrichtvorrichtung, wobei der Bearbeitungslaserstrahl durch einen aus der Austrittsoptik austretenden Pilotlichtstrahl ersetzt wird und bei ausgewählten Bahnpunkten der Bahnkurve jeweils folgende Verfahrensschritte durchgeführt werden:
Aufsetzen der Ausrichtvorrichtung auf die Werkstückoberfläche im jeweils ausgewählten Bahnpunkt;
Ausrichten von Austrittsoptik und Werkstück samt aufgesetzter Ausrichtvorrichtung relativ zueinander, bis der Pilotlichtstrahl bezüglich der Achse der Ausrichtvorrichtung entweder an identischen x-y-Positionen oder mit vorbestimmtem x-y-Versatz auf die beiden x-y-auflösenden Flächendetektoren trifft; und
Speichern der jeweils ausgerichteten Endposition von Austrittsoptik und/oder Werkstück.

Die Ausrichtung der z.B. von einem Roboterarm getragenen Austrittsoptik (Bearbeitungsoptik) wird mithilfe des Pilotlichtstrahls durchgeführt und dient zum Festlegen der Roboterbewegung bei der späteren Werkstückbearbeitung mittels des Bearbeitungslaserstrahls, d.h. zum Teachen des Roboters. Die Ausrichtung des Pilotlichtstrahls zum Werkstück erfolgt sowohl im Winkel als auch in der x-y-Richtung.

Vorzugsweise wird das Ausrichten von Austrittsoptik und Werkstück relativ zueinander anhand der x-y-aufgelösten Ausgangssignale der beiden Flächendetektoren automatisch gesteuert.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

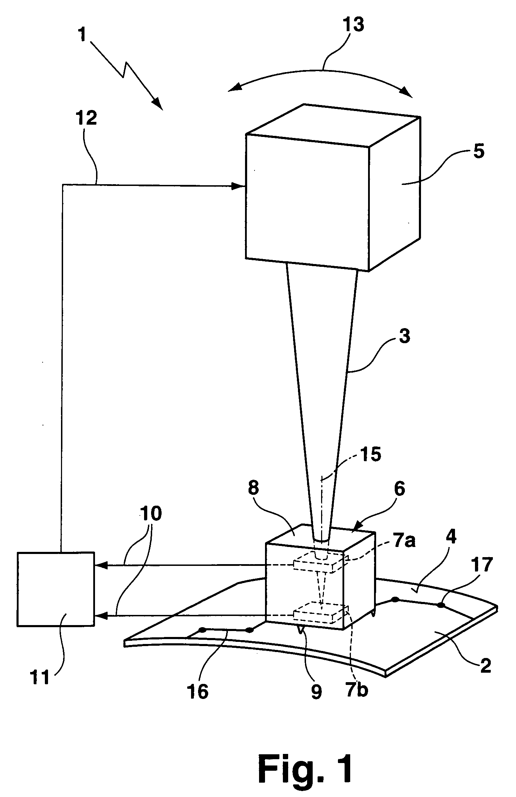

- Fig. 1: die erfindungsgemäße Ausrichtanordnung mit einer ersten Ausführungsform der erfindungsgemäßen Ausrichtvorrichtung; und
- Fig: 2: die erfindungsgemäße Ausrichtanordnung mit einer zweiten Ausführungsform der erfindungsgemäßen Ausrichtvorrichtung.

Die in **Fig. 1** gezeigte Anordnung **1** dient zur Ausrichtung eines auf ein Werkstück **2** treffenden Lichtstrahls **3** zur gekrümmten Werkstückoberfläche **4**. Dazu weist die Ausrichtanordnung 1 eine Austrittsoptik **5**, die den Lichtstrahl 3 auf das Werkstück 2 richtet, und eine Ausrichtvorrichtung **6** auf, die auf die Werkstückoberfläche 4 aufgesetzt ist. Die Austrittsoptik 5 ist an einer nicht gezeigten Bewegungseinrichtung, z.B. an einem Roboterarm, befestigt. Die Ausrichtvorrichtung 6 weist zwei im Strahlengang des auszurichtenden Lichtstrahls 3 hintereinander angeordnete ortsauflösende Flächendetektoren **7a, 7b** auf, wobei der näher an der Austrittsoptik 5 angeordnete Flächendetektor 7a für den auszurichtenden Lichtstrahl 3 teildurchlässig ist. Unten am Gehäuse **8** der Ausrichtvorrichtung 6 sind drei Füße **9** vorgesehen, mit denen die Ausrichtvorrichtung 6 auf der gekrümmten Werkstückoberfläche 4 lotrecht aufsteht. Über Leitungen **10** werden die ortsaufgelösten Ausgangssignale der positionsempfindlichen Flächendetektoren 7a, 7b einer Steuereinheit **11** zugeführt, welche die Austrittsoptik 5 bzw. die Robotersteuerung über eine Steuerleitung **12** für eine Bewegung im Sinne des Doppelpfeils **13** anhand der ortsaufgelösten Ausgangssignale ansteuert.

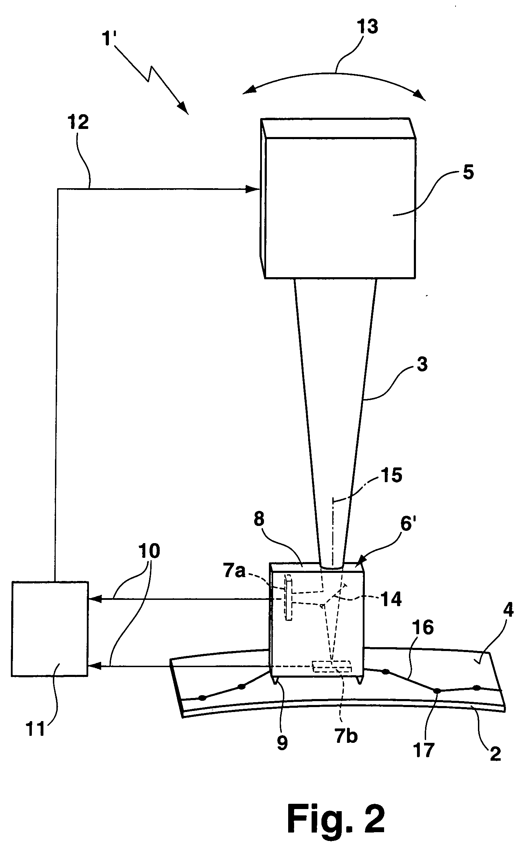

Von der Ausrichtanordnung 1 unterscheidet sich die in **Fig. 2** gezeigte Ausrichtanordnung **1'** allein dadurch, dass die Ausrichtvorrichtung **6'** einen teildurchlässigen Spiegel **14** aufweist, der den auftreffenden Lichtstrahl 3 sowohl in Richtung auf den einen Flächendetektor 7b durchlässt als auch in Richtung auf den anderen Flächendetektor 7a reflektiert. Die beiden Flächendetektoren 7a, 7b sind bei der Ausrichtvorrichtung 6 im Strahlengang des auszurichtenden Lichtstrahls 3 optisch hintereinander und bei der Ausrichtvorrichtung 6' optisch parallel zueinander angeordnet.

Um den Lichtstrahl 3 mithilfe der Ausrichtanordnung 1 bzw. 1' lotrecht zur gekrümmten Werkstückoberfläche 2 auszurichten, wird die Austrittsoptik 5 gegenüber der auf das Werkstück 2 aufgesetzten Ausrichtvorrichtung 6, 6' in Richtung des Doppelpfeils 13 bewegt, bis der Lichtstrahl 3 an bezüglich der Achse **15** der Ausrichtvorrichtung 6, 6' identischen x-y-Positionen auf die beiden x-y-auflösenden Flächendetektoren 7a, 7b trifft. Das Ausrichten erfolgt dabei automatisiert mittels der Steuereinheit 11 anhand der x-y-aufgelösten Ausgangssignale der Flächendetektoren 7a, 7b. Die beiden Flächendetektoren 7a, 7b können so ausgeführt sein, dass beide ein identisches Ausgangssignal liefern, wenn der Lichtstrahl 3 parallel zur Achse 15 der Ausrichtvorrichtung 6, 6' ausgerichtet ist. Sie können auch ein definiert unterschiedliches Ausgangssignal liefern, das bekannt und in der Steuerung hinterlegt ist.

Die Ausrichtanordnung 1 bzw. 1' kann insbesondere zum Festlegen (Teachen) der Roboterbewegung bei der Bearbeitung von Werkstücken 2 mittels eines Bearbeitungslaserstrahls eingesetzt werden, der durch die Austrittsoptik 5 auf der Werkstückoberfläche 4 entlang einer Bahnkurve **16** möglichst lotrecht zur Werkstückoberfläche 4 verfahren werden soll. Bei diesem Teach-Verfahren wird der Bearbeitungslaserstrahl durch einen aus der Austrittsoptik 5 austretenden Pilotlichtstrahl (Pilotlaserstrahl) 3 simuliert, und dann werden bei ausgewählten Bahnpunkten 17 der Bahnkurve 16 jeweils folgende Verfahrensschritte durchgeführt:
1. lotrechtes Aufsetzen der Ausrichtvorrichtung 6, 6' auf die Werkstückoberfläche 4 im jeweils ausgewählten Bahnpunkt 17;
2. Bewegen der Austrittsoptik 5 gegenüber dem Werkstück 2, bis der Pilotlichtstrahl 3 an bezüglich der Achse 15 der Ausrichtvorrichtung 6, 6' identischen x-y-Positionen auf die beiden x-y-auflösenden Flächendetektoren 7a, 7b trifft;
3. Speichern der jeweils ausgerichteten Endposition von Austrittsoptik 5 und/oder Ausrichtvorrichtung 6, 6'.

Der 2. Verfahrensschritt, also das Ausrichten der Austrittsoptik 5 zum Werkstück 2, wird von der Steuereinheit 11 automatisiert anhand der x-y-aufgelösten Ausgangssignale der beiden Flächendetektoren 7a, 7b durchgeführt.

## Patentansprüche

1. Vorrichtung (6; 6') zur Ausrichtung eines Lichtstrahls (3), insbesondere Laserstrahls, zu einer Werkstückoberfläche (4),
mit einer auf die Werkstückoberfläche (4) in einem vorbestimmtem Winkel aufsetzbaren Unterseite und mit zwei ortsauflösenden Flächendetektoren (7a, 7b), die in fester Anordnung zueinander und in unterschiedlichem optischem Abstand zur Lichtquelle des in die Ausrichtvorrichtung (6; 6') einfallenden Lichtstrahls (3) angeordnet sind.

2. Ausrichtvorrichtung nach Anspruch 1, **dadurch gekennzeichnet, dass** die beiden Flächendetektoren (7a, 7b) im Strahlengang des einfallenden Lichtstrahls (3) hintereinander angeordnet sind und derjenige Flächendetektor (7a), auf den der in die Ausrichtvorrichtung (6) einfallende Lichtstrahl (3) zuerst trifft, für den Lichtstrahl (3) teildurchlässig ist.

3. Ausrichtvorrichtung nach Anspruch 1, **gekennzeichnet durch** einen Strahlteiler, insbesondere einen teildurchlässigen Spiegel (14), der den in die Ausrichtvorrichtung (6') einfallenden Lichtstrahl (3) sowohl in Richtung auf den einen Flächendetektor (7b) durchlässt als auch in Richtung auf den anderen Flächendetektor (7a) reflektiert.

4. Ausrichtvorrichtung nach einem der vorhergehenden Ansprüche, **dadurch gekennzeichnet, dass** die Ausrichtvorrichtung (6; 6') lotrecht auf die Werkstückoberfläche (4) aufsetzbar ist.

5. Ausrichtvorrichtung nach einem der vorhergehenden Ansprüche, **dadurch gekennzeichnet, dass** die Unterseite drei, insbesondere magnetische, Füße (9) zum Aufsetzen auf die Werkstückoberfläche (4) aufweist.

6. Ausrichtvorrichtung nach einem der vorhergehenden Ansprüche, **gekennzeichnet durch** ein gemeinsames Gehäuse (8) für beide Flächendetektoren (7a, 7b).

7. Ausrichtvorrichtung nach einem der vorhergehenden Ansprüche, **dadurch gekennzeichnet, dass** die Flächendetektoren (7a, 7b) als Photodetektoren, insbesondere als positionsempfindliche Photoelemente, Lateraleffektdioden oder Quadrantendetektoren, ausgebildet sind.

8. Ausrichtvorrichtung nach einem der vorhergehenden Ansprüche, **gekennzeichnet durch** eine Anzeigeeinheit für die Ausgangssignale der Flächendetektoren (7a, 7b).

9. Anordnung (1; 1') zur Ausrichtung eines auf ein Werkstück (2) treffenden Lichtstrahls (3), insbesondere Laserstrahls, zur Werkstückoberfläche (4), mit einer Austrittsoptik (5) für den Lichtstrahl (3) und einer auf die Werkstückoberfläche (4) aufgesetzten Ausrichtvorrichtung (6; 6') nach einem der vorhergehenden Ansprüche, wobei Austrittsoptik (5) und Werkstück (2) relativ zueinander bewegbar sind.

10. Ausrichtanordnung nach Anspruch 9, **gekennzeichnet durch** eine Steuereinheit (11), welche die Relativbewegung zwischen Austrittsoptik (5) und Werkstück (2) anhand von ortsaufgelösten Ausgangssignalen der beiden Flächendetektoren (7a, 7b) steuert.

11. Teach-Verfahren für das Erstellen von Programmen einer Bearbeitung von Werkstücken (2) mittels eines Bearbeitungslaserstrahls, der durch die Austrittsoptik (5) auf der Werkstückoberfläche (4) entlang einer Bahnkurve (16) verfahren wird, unter Verwendung einer Ausrichtanordnung (1; 1') nach Anspruch 9 oder 10,
wobei der Bearbeitungslaserstrahl durch einen aus der Austrittsoptik (5) austretenden Pilotlichtstrahl (3) ersetzt wird und bei ausgewählten Bahnpunkten (17) der Bahnkurve (16) jeweils folgende Verfahrensschritte durchgeführt werden:
Aufsetzen der Ausrichtvorrichtung (6; 6') auf die Werkstückoberfläche (4) im jeweils ausgewählten Bahnpunkt (17);
Ausrichten von Austrittsoptik (5) und Werkstück (2) samt aufgesetzter Ausrichtvorrichtung (6; 6') relativ zueinander, bis der Pilotlichtstrahl (3) bezüglich der Achse (15) der Ausrichtvorrichtung (6; 6') entweder an identischen x-y-Positionen oder mit vorbestimmtem x-y-Versatz auf die beiden x-y-auflösenden Flächendetektoren (7a, 7b) trifft; und
Speichern der jeweils ausgerichteten Endposition von Austrittsoptik (5) und/oder Werkstück.

12. Teach-Verfahren nach Anspruch 11, **dadurch gekennzeichnet, dass** das Ausrichten von Austrittsoptik (5) und Werkstück (2) relativ zueinander anhand der x-y-aufgelösten Ausgangssignale der beiden Flächenphotodetektoren (7a, 7b) automatisch gesteuert wird.
